Europäisches Patentamt

European Patent Office

Office européen des brevets

(11) Publication number: **0 141 011**
**A1**

# (12) EUROPEAN PATENT APPLICATION

(21) Application number: **84104501.6**

(22) Date of filing: **19.04.84**

(51) Int. Cl.⁴: **F 02 N 15/10**
**B 60 R 25/04**

(30) Priority: **30.08.83 JP 136107/83 U**

(43) Date of publication of application:
**15.05.85 Bulletin 85/20**

(84) Designated Contracting States:
**DE FR GB**

(71) Applicant: **MITSUBISHI DENKI KABUSHIKI KAISHA
2-3, Marunouchi 2-chome Chiyoda-ku
Tokyo 100(JP)**

(72) Inventor: **Yabunaka, Kiyoshi
7-402, Kyoguchi Danchi No. 13, Shimizu
Jyohtoh-cho Himeji-shi Hyogo-ken(JP)**

(74) Representative: **Liesegang, Roland, Dr.-Ing.
Sckellstrasse 1
D-8000 München 80(DE)**

(54) Engine starting device.

(57) An engine starting device comprises a starter motor (2) mounted on the engine (1) of a car, a casing (13) containing therein both the starter motor (2) and a digital comparator (17) connected to the starter motor (2), the starter motor being actuated by a comparative signal received from the digital comparator (17).

FIGURE 2

EP 0 141 011 A1

0141011
European Patent Attorney

Sckellstr.
D-8000 München 80
Telefon (089) 4 46 24 96

—Telex 5214382 pali d
Telekopierer (089) 272 04 80, 272 04 81
Telegramme patemus münchen

Postscheck München 394 18-802
Hypobank München 6 400 194 333
Reuschelbank München 2 603 007

MITSUBISHI DENKI KABUSHIKI KAISHA

Tokyo, Japan

EU 147 56

## ENGINE STARTING DEVICE

The present invention relates to an engine starting device. More particularly, it relates to an engine starting device for eliminating its erroneous start.

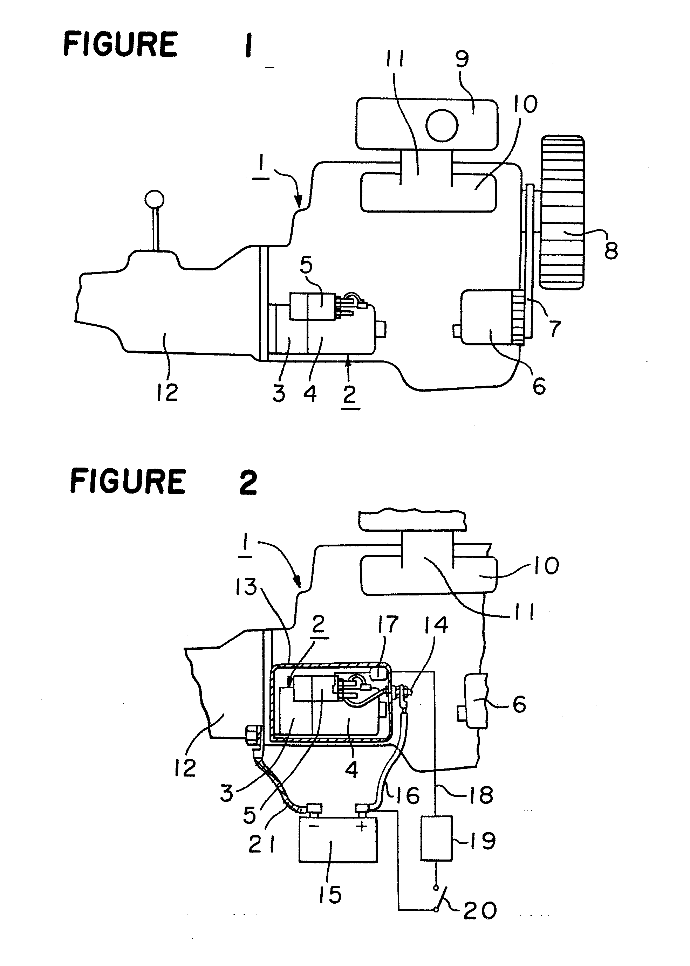

Figure 1 shows a conventional internal combustion engine to be installed in a car. In Figure 1, a starter motor 2 constituted by a d.c. motor 4 and an electromagnetic switch 5 is mounted on a frame 3 of an internal combustion engine 1 (hereinafter referred to as an engine). There is attached to the engine an alternator driven by a fan belt 7, a cooling fan 8, an intake pipe 10 to which a carburetor 11 and an air cleaner 9 are connected and a speed reduction unit 12.

The operation of the conventional engine shown in Figure 1 will be described. Upon actuation of the electromagnetic switch 5 of the starter motor 2 by feeding current, a pinion installed in the starter motor is interlocked with a ring gear of the engine 1 and the d.c. motor 4 is connected to a power source (a car battery) to produce a rotational force thereby starting the engine 1. After starting of the engine, the alternator 6 is driven by the fan belt 7 whereby the power source is charged by an output resulted from the alternator.

In the conventional device having the construction described above, since the starter motor is actuated by applying an actuation signal (having a power source voltage) to the electromagnetic switch 5, the engine can be easily started by opening the bonnet of the car and by operating the electromagnetic switch at the engine room side, which does not require starting of the starter motor by operating a key switch in the car cabin. On account of this, there is risk of the robbery of cars.

It is an object of the present invention to provide an engine starting device which eliminates erroneous operation of starter motor or risk of robbery of a car by constructing the device so that the starter motor can not be easily actuated from the outside.

According to the present invention, there is provided an engine starting device comprising a starter motor mounted on the engine of a car, a casing containing therein the starter motor and a digital comparator connected to the starter motor, wherein the starter motor is actuated by a comparative signal from the digital comparator.

A more complete appreciation of the invention and many of the attendant advantages thereof will be readily obtained as the same becomes better understood by reference to the following detailed description when considered in connection with the accompanying drawing, wherein:

Figure 1 is a diagram showing an internal combustion engine equipped with the conventional engine starting device and

Figure 2 is a diagram showing the construction of an embodiment of the engine starting device according to the present invention.

An embodiment of the engine starting device of the present invention will be described with reference to Figure 2. The same reference numerals as in Figure 1 designate the same or corresponding parts.

A casing 13 contains therein the starter motor 2, which is made of a rigid material such as metallic plate. One end of a connecting wire 16 is connected to the positive terminal 14 of a power source (a battery) 15 and the terminal 14 is, in turn, connected to the electromagnetic switch 5. A digital comparator 17 is placed in the casing 13 to be connected to the electromagnetic switch 5. A cable 18 one end of which is connected to the comparator 17, is led out the casing to be connected to an encoder 19. A key switch 20 placed in the car cabin is connected between the power source 15 and the encoder 19. An earth cable 21 connects the negative terminal of the power source 15 to the housing of the engine 1.

The operation of the engine starting device as shown in Figure 2 will be described.

First of all, a driver in the car cabin operates a key to close the key switch 20. Then, the encoder is actuated and an coded digital signal (either serial or parallel) is input in the digital comparator 17. A construction is made in such a manner that the digital signal output from the encoder 19 is made coincident with a comparative signal which is previously determined in the digital comparator 17 with the result that a reversed level signal is produced by the coincidence of the signals whereby the electromagnetic switch 5 is conductive to operate. Then, the starter motor 2 is driven to start the engine 1 in the same manner as described with reference to Figure 1.

Thus, in the present invention, since the starter motor 2 is surrounded by the casing 13 together with the electromagnetic switch 5, the starter motor 2 can not be actuated without operating the key switch 20 to thereby preventing erroneous operation of the starter motor 2.

The encoder 19 may be a plug-in type encoder which allows easy attachment and detachment. In this case, if a driver detaches the encoder 19 from a position when he leaves the car, a coded digital signal is not read by any one, on account of which it is impossible for that person to start the starter motor thereby preventing robbery of the car.

Further, the cable 18 may be an optical fiber cable so that the signal of the encoder is converted into an optical modulation signal to input it in the digital comparator.

Obviously, numerous modifications and variations of the present invention are possible in light of the above teachings. It is therefore to be understood that within the scope of the appended claims, the invention may be practiced otherwise than as specifically described herein.

Patentanwalt
European Patent Attorney

Sckellstrasse 1
D-8000 München 80
Telefon (089) 4 48 24 96

Telex 5214382 pali d
Telekopierer (089) 2720480, 2720481
Telegramme patemus münchen

Postscheck München 39418-802
Hypobank München 6400194333
Reuschelbank München 2603007

- 6 -

Claims

1. An engine starting device which comprises a
   starter motor (2) mounted on the engine (1)
   of a car, c h a r a c t e r i z e d  in that
   a casing (13) contains therein both said starter
   motor (2) and a digital comparator (17) connected
   to said starter motor, and in that said starter
   motor is actuated by a comparative signal received
   from said digital comparator.

2. An engine starting device according to claim 1,
   c h a r a c t e r i z e d  in that an encoder (19)
   to produce a code signal based on a signal received
   from a starter switch (5) is connected to said
   digital comparator (17).

3. An engine starting device according to claim 2,
   c h a r a c t e r i z e d  in that said encoder (19)
   is a plug-in type encoder to allow attachement
   and detachment.

# FIGURE 1

# FIGURE 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 726 737 (AMBROSIUS) *Page 7, lines 1-13; figure 1; page 9, lines 6-14; figure 2a* | 1-3 | F 02 N 15/10 B 60 R 25/04 |
| | --- | | |
| X | WO-A-8 103 002 (BLAIS) *Page 6, lines 24-33; page 7, lines 17-33; figures 1,3* | 1-3 | |
| | ----- | | |

TECHNICAL FIELDS SEARCHED (Int. Cl.4)

F 02 N
B 60 R 25/00

The present search report has been drawn up for all claims

| Place of search | Date of completion of the search | Examiner |
|---|---|---|
| THE HAGUE | 28-11-1984 | BIJN E.A. |